# EUROPEAN PATENT SPECIFICATION

(11) **EP 1 413 172 B1**
(45) Date of publication and mention of the grant of the patent: **25.03.2009**
(21) Application number: 02740136.3
(22) Date of filing: 09.07.2002
(51) Int. Cl.: H05B 3/84, B60R 1/06

(54) **MIRROR HEATER**
SPIEGELHEIZER
RECHAUFFEUR DE MIROIR

(30) Priority: 09.07.2001 AU PR016204; 30.10.2001 AU PR018527
(43) Date of publication of application: 28.04.2004
(73) Proprietor: Visiocorp Patents S.à.r.l., 1653 Luxembourg (LU)
(72) Inventor: DUANCE, Roger, Lonsdale, South Australia 5160 (AU)
(74) Representative: Rausch, Gabriele
(86) International application number: PCT/AU2002/000906
(87) International publication number: WO 2003/007662

(56) References cited:
- EP-A1- 0 991 301
- EP-A2- 1 053 911
- EP-A2- 1 053 911
- WO-A1-00/76274
- CA-A1- 2 093 479
- DE-A1- 2 645 231
- DE-A1- 10 042 563
- DE-C1- 3 936 638
- GB-A- 1 483 033
- GB-A- 2 325 993
- PATENT ABSTRACTS OF JAPAN & JP 09 002 212 A (MURAKAMI KAIMEIDOU) 21 June 1995

## Description

This invention relates to heaters and heating systems for mirrors, particularly automobile external mirrors and to methods for demisting or de-icing these mirrors.

External mirrors on automobiles are essential to allow the driver to view areas to the side and to the rear of the automobile while driving, and particularly, to see other vehicles approaching.

In certain climates, the clarity of the view provided by the mirror can be severely compromised by ice forming over the surface of the mirror or, by condensation forming on the mirror. In such instances, the safety of the driver and surrounding road users is compromised as the driver is unable to properly view these critical areas about the vehicle.

This problem has traditionally been addressed by providing a heating element within the mirror which upon manual activation by the driver begins to heat the mirror surface and remove any ice or condensation formed thereon. This however requires the intervention of the driver and may take the driver's attention away from driving the vehicle.

Some automatic electronic systems also exist, which sense when a mirrors is iced or fogged, however, these systems can be unreliable and can be complex and costly to manufacture and install.

It would be advantageous if a method and apparatus were provided which would allow for automatic demisting and de-icing of external automobile mirrors to reduce the formation of ice or condensation on the mirrors, while reducing costs and complexity.

In the prior art, GB 1,483,033 discloses a circuit for controlling the energisation of electrically heated vehicle windows. According to the apparatus disclosed in this document, a switch is provided which may be operated by the driver in order to initiate de-icing or de-misting of the windscreen. According to this document, a further switch may be provided which can be closed briefly in order to operate increased de-icing for a predetermined period.

According to a first aspect of the present invention, there is provided a vehicle mirror heating system comprising;
a vehicle mirror for mounting to a vehicle, the vehicle having an engine and an ignition line;
a heating element disposed adjacent a surface of the mirror; and
a heating control circuit for controlling the operation of the heating element, wherein in use, the control circuit activates the heating element for a first predetermined period of time upon ignition of the vehicle engine.

Preferably, the heating system will also comprise a temperature sensor for sensing the temperature of the surface of the mirror and for providing control signals to the heating control circuit to activate the heating element for a second predetermined period of time, after the first predetermined period of time has elapsed, when the temperature of the mirror surface falls below a minimum threshold.

Preferably, the temperature sensor is disposed behind the surface of the mirror and is preferably a thermistor.

Preferably, the heating system is powered by the vehicle ignition line. According to a second aspect of the present invention, there is provided a method of de-fogging or de-icing a vehicle mirror, the method comprising;
activating a heating element disposed adjacent a surface of the vehicle mirror upon ignition of an engine of the vehicle; and
deactivating the heating element after a first predetermined period of time.

Preferably, the method further comprises sensing the temperature of the mirror surface and reactivating the heating element for a second predetermined period of time when the sensed temperature falls below a minimum threshold.

According to a third aspect of the present invention, there is provided a vehicle mirror heater for de-fogging or de-icing the surface of a. vehicle mirror, the heater comprising a heating element for mounting adjacent the surface of the vehicle mirror of a vehicle having an engine and an ignition line; and
a heating control circuit for controlling operation of the heating element, wherein in use, the control circuit, activates the heating element for a first predetermined period of time upon ignition of the vehicle engine.

Preferably, the vehicle mirror heater will also comprise a temperature sensor for mounting adjacent the surface of the vehicle mirror, to sense the temperature of the surface of the mirror and for providing control signals to the heating control circuit to activate the heating element for a second predetermined period of time, after the first predetermined period of time has elapsed, when the temperature of the mirror surface falls below a minimum threshold.

Preferably, the temperature sensor is a thermistor.

Preferably, the mirror heater is, in use, powered by the vehicle ignition line.

An embodiment of the invention will now be described by way of non-limitative example with reference to the accompanying drawing, in which:

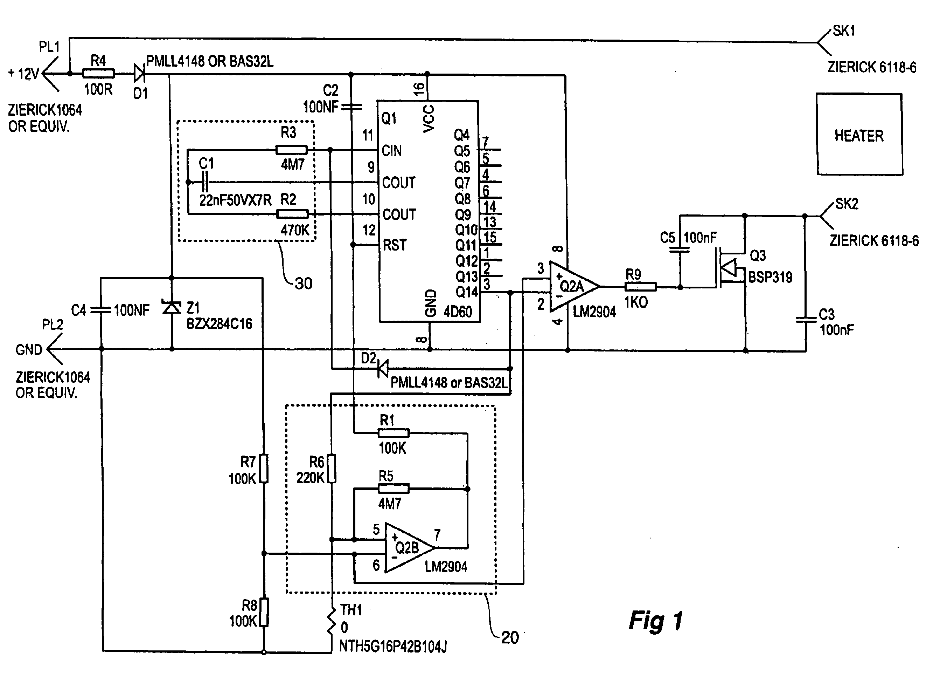

Figure 1 shows a circuit layout of the heating control system of the present invention.

Referring now to Figure 1, there is shown a circuit diagram of the heating control system of the present invention. Power to the circuit is provided by the vehicle ignition line (not shown), which is powered only when the vehicle engine is running. When the vehicle ignition line is powered, a positive voltage is provided to power line PL1, which provides a reset pulse to counter Q1 via capacitor C2. This reset pulse sets all Q1 outputs Q4 to Q14 to logic 0. When Q14 output is low, this enables an oscillator (30) formed by components R2, R3 and C1, via diode D2. Upon actuation of the oscillator 30, counter Q1 begins to count up.

A low output on Q14 also switches on heating element 10 via amplifier Q2A and via mosfet Q3.

The timing of the oscillator is set such that output Q14 goes high after the desired time period, for example 5 minutes. When Q14 goes high (ie when counter Q1 has counted out), it switches off both the oscillator (via diode D2) and the heater 10 (via amplifier Q2A and mosfet Q3).

When output Q14 goes high, this also enables thermistor circuit 20 by bringing thermistor divider resistor R6 to a logic 1. R6 and the negative temperature coefficient thermistor TH1 are chosen such that the thermistor resistance becomes equal to the resistance of R6 at the temperature selected for circuit activation. For example, the thermistor may be selected to be equal to the value of R6 at 5°C. As the thermistor value rises above 220K when the temperature falls below 5°C, the output from amplifier Q2B goes high and resets outputs Q4 to Q14 to low via resistor R1.

In practice, thermistor TH1 will be mounted behind the mirror glass within the mirror housing. In this way, it can obtain a relatively accurate reading of the temperature of the mirror glass while being unobtrusive.

Counter Q1 then commences to count up as described above, causing heater 10 to actuate until the count period has expired, again as described above. As the temperature of the mirror increases, the thermistor value will drop below that of R6 causing the thermistor circuit to remain off until the temperature of the mirror surface has sufficiently dropped to again activate amplifier Q2B.

It is also desirable to provide to the driver an indication as to when the heater 10 is actually on. This may be provided by any convenient means, whether it be an audible indication or a visual indication such as an LED which is illuminated upon actuation of heater 10, and extinguished when heater 10 is turned off.

Feed-back resistor R5 provides a measure of hysteresis to the temperature such that the temperature must fall a little below 5° before the circuit activates and rise a little above 5° before it deactivates. This hysteresis prevents oscillation around the trigger point.

Diode D1 in power line PL1 provides for negative voltage isolation and resistor R4 and diode D1 guard against over voltage spikes as will be understood by the person skilled in the art. Capacitors C3, C4 and C5 provide further protection against voltage spikes and slow the output switching speed to reduce noise generated by the circuit.

The invention described herein provides a reliable and automatic method of demisting and/or de-icing external automobile mirrors. It will be understood that the invention has been described with reference to a particular preferred embodiment and that many other means of carrying out the invention are possible within the scope of the invention as will be understood by the person skilled in the art.

## Claims

1. A vehicle mirror heater (10) for de-fogging or de-icing a surface of a vehicle mirror for a vehicle which has an engine and an ignition line, the heater (10) comprising:
- a heating element for mounting adjacent the surface of the mirror and
- a heating control circuit arranged to control the operation of the heating element, wherein the control circuit is arranged to activate the heating element for a first predetermined period of time upon ignition of vehicle engine and
- a temperature sensor (TH1) for mounting adjacent to the surface of the mirror, for sensing the temperature of the surface of the mirror and for providing control signals to the heating control circuit to activate the heating element for a second predetermined period of time after the first predetermined period of time has elapsed, when the temperature of the mirror surface falls below a minimum threshold.

2. A vehicle mirror heater (10) according claim 1 wherein the heater (10) is powered by the ignition line of the vehicle.

3. A vehicle mirror heater (10) according claim 1 wherein the temperature sensor is a thermistor.

4. A vehicle heating system comprising:
- the vehicle mirror heater of claim 1 and
- a vehicle mirror for mounting to a vehicle having an engine and an ignition line.

5. A method for de- fogging and de-icing a vehicle mirror the method comprising:
- Activating a heating element disposed adjacent to a surface of the vehicle mirror upon ignition of an engine of the vehicle and
- Deactivating the heating a element after a first predetermined period of time
- And sensing the temperature of the mirror surface and reactivating the heating element for a second predetermined period of time when the sensed temperature falls below minimum threshold.

## Patentansprüche

1. Spiegelheizer (10) für Fahrzeuge zum Entfernen von Kondensationsbeschlag und Eis von der Oberfläche eines Fahrzeugspiegels eines Fahrzeugs, welches eine Zündleitung aufweist, welcher Heizer (10) folgendes aufweist;
- ein Heizelement zum Anbringen angrenzend an die Oberfläche des Spiegels;
- eine Heizungssteuerungsschaltung, welche dazu eingerichtet ist, den Betrieb des Heizelements zu steuern, wobei die Steuerungsschaltung dazu eingerichtet ist, das Heizelement für einen ersten vorbestimmten Zeitraum nach Anlassen des Fahrzeugmotors zu aktivieren;
- einen Temperatursensor (TH1) zum Anbringen angrenzend an die Oberfläche des Spiegels zum Feststellen der Temperatur der Oberfläche des Spiegels und zum Liefern eines Steuersignals an die Heizungssteuerungsschaltung um das Heizelement für einen zweiten vorbestimmten Zeitraum zu aktivieren, nachdem der erste vorbestimmte Zeitraum verstrichen ist, wenn die Temperatur der Spiegeloberfläche unter einen unteren Grenzwert fällt

2. Speigelheizer (10) für Fahrzeuge nach Anspruch 1, wobei der Heizer (10) von der Zündleitung des Fahrzeugs mit Leistung versorgt wird.

3. Spiegelheizer (10) für Fahrzeuge nach Anspruch 1, wobei der Temperatursensor ein Thermistor ist.

4. Fahrzeugheizung, welche folgendes aufweist:
- einen Spiegelheizer für Fahrzeuge nach Anspruch 1, und
- einen Fahrzeugspiegel zum Anbringen an einem Fahrzeug, welches einen Motor und eine Zündleitung aufweist

5. Verfahren zum Entfernen von Kondensationsbeschlag und Eis von einem Fahrzeugspiegel, welches die folgenden Schritte aufweist:
- Aktivieren des Heizelements, welches angrenzend an zur Oberfläche des Fahrzeugspiegels angebracht ist, beim Einschalten der Zündung des Fahrzeugmotors;
- Deaktivieren des Heizelements nach einem ersten vorbestimmten Zeitraum; und
- Feststellen der Temperatur der Spiegeloberfläche und Reaktivieren des Heizelements für einen zweiten vorbestimmten Zeitraum, wenn die festgestellte Temperatur unter einen unteren Grenzwert fällt.

## Revendications

1. Réchauffeur (10) de rétroviseur de véhicule pour assureur le désembuage ou le dégivrage d'une surface sur un rétroviseur de véhicule destiné à un véhicule qui est équipé d'un moteur et d'une ligne d'allumage, le réchauffeur (10) comprenant :
- un élément de chauffage destiné à être monté sur une position adjacent à la surface du rétroviseur, et
- un circuit de commande de chauffage lequel est agencé de manière à commander le fonctionnement de l'élément de chauffage, cas dans lequel le circuit de commande est agencé de manière à activeur l'élément de chauffage pendant un premier intervalle de temps prédéterminé lors de l'allumage du moteur du véhicule, et
- un capteur de température (TH1) destiné à être monté sur une position adjacente à la surface du rétroviseur afin de détecter la température de la surface du rétroviseur et d'acheminer des signaux de commande au circuit de commande du chauffage afin d'activer l'élément de chauffage pendant un deuxième intervalle de temps prédéterminé une fois que le premier intervalle de temps prédéterminé s'est écoulé, lorsque la température de la surface du rétroviseur descend en dessous d'un seuil minimum.

2. Réchauffeur (10) de rétroviseur de véhicule selon la revendication 1, le réchauffeur (10) recevant son énergie électrique de la ligne d'allumage du véhicule.

3. Réchauffeur (10) de rétroviseur de véhicule selon la revendication 1, le capteur de température étant une thermistance.

4. Système de chauffage de véhicule comprenant :
- le réchauffeur de rétroviseur de véhicule selon la revendication 1, et
- un rétroviseur de véhicule destiné à être monté sur un véhicule équipé d'un moteur et d'une ligne d'allumage.

5. Procédé de désembuage et de dégivrage d'un rétroviseur de véhicule, le procédé comprenant :
- l'opération consistant à activer un élément de chauffage lequel est disposé en position adjacente à une surface du rétroviseur de véhicule lors de l'allumage du moteur d'un véhicule, et
- l'opération consistant à désactiver l'élément de chauffage après un premier intervalle de temps prédéterminé,
- et l'opération consistant à détecter la température de la surface du rétroviseur et à réactiver l'élément de chauffage pendant un deuxième intervalle de temps prédéterminé lorsque la température détectée descend en dessous d'un seuil minimum.
